# EUROPÄISCHE PATENTSCHRIFT

(11) **EP 3 047 878 B1**
(45) Veröffentlichungstag und Bekanntmachung des Hinweises auf die Patenterteilung: **24.11.2021**
(21) Anmeldenummer: 16152778.3
(22) Anmeldetag: 26.01.2016
(51) Int. Cl.: A62C 2/12, F24F 13/14, F16L 5/04

(54) **ANORDNUNG ZUM VERHINDERN DER AUSBREITUNG EINES BRANDES IN EINEM GEBÄUDE, MIT ZUMINDEST EINER GEBÄUDEWAND AUS HOLZBAUSTOFFEN**
ASSEMBLY FOR PREVENTING THE SPREAD OF FIRE IN A BUILDING WITH AT LEAST ONE BUILDING WALL MADE OF WOOD BUILDING MATERIALS
SYSTEME DESTINE A EMPECHER LA PROPAGATION D'UN INCENDIE DANS UN BATIMENT, COMPRENANT AU MOINS UNE PAROI DE BATIMENT EN BOIS

(30) Priorität: 26.01.2015 DE 202015000505 U
(43) Veröffentlichungstag der Anmeldung: 27.07.2016
(73) Patentinhaber: Wildeboer, Werner, 26826 Weener (DE)
(72) Erfinder: Wildeboer, Werner, 26826 Weener (DE)
(74) Vertreter: Ter Meer Steinmeister & Partner

(56) Entgegenhaltungen:
- AU-A1- 2004 203 153
- DE-A1- 10 033 306
- DE-A1- 19 714 625
- DE-A1-102007 010 682
- DE-U1-202007 013 237
- None

## Beschreibung

Die Erfindung betrifft eine Anordnung zum Verhindern der Ausbreitung eines Brandes in einem Gebäude mit zumindest einer Gebäudewand und mit wenigstens einer durch die Gebäudewand hindurchführenden Lüftungsleitung, wobei die Gebäudewand aus Holzbaustoffen gefertigt ist und wobei der Lüftungsleitung zumindest eine Brandschutzklappe zugeordnet ist, wobei in der Gebäudewand zumindest eine Laibungen aufweisende Einbauöffnung für die Brandschutzklappe angeordnet ist und der Brandschutzklappe eine Ummantelung zumindest abschnittsweise zugeordnet ist, die zwischen der Brandschutzklappe und an die Brandschutzklappe angenäherten Abschnitten der Gebäudewand angeordnet ist, wobei die Anordnung Halteelemente zum Befestigen der Brandschutzklappe in der Gebäudewand auf beiden Seiten der Gebäudewand umfasst, und die Tiefe der Ummantelung für die Brandschutzklappe größer ist als die Dicke der Gebäudewand.

Bekannt sind raumabschließende Wände und Decken, einschließlich Fußböden, die einer einseitigen Brandbeanspruchung standhalten müssen. Dabei kann diese sowohl von der einen als auch von der anderen Seite auftreten. Wände und Decken müssen daher insbesondere in mehrgeschossigen und gestreckten Gebäuden eine bestimmte Feuerwiderstandsdauer aufweisen. Insofern bietet sich allgemein an, sie aus nicht brennbaren Baustoffen (Beton, Mauerwerk) herzustellen.

Größere Gebäude erfordern raumlufttechnische Anlagen, vermehrt auch im Wohnungsbau. Diese Anlagen erfordern Lüftungsleitungen zur Fortleitung und Übertragung der notwendigen Luft in die einzelnen Räume. Die Lüftungsleitungen führen durch Wände und Decken. Im Brandfall müssen sie dort durch Brandschutzklappen verschlossen werden, um über eine bestimmte Zeitdauer eine Übertragung von Feuer und Rauch zu verhindern. Brandschutzklappen eingebaut in Wänden und Decken aus nicht brennbaren Baustoffen sind allgemein bekannt.

Heutige Entwicklungen tendieren vermehrt auch zum Holzbau, indem sowohl Wände als auch Decken mit raumabschließender Wirkung, nachfolgend zusammengefasst als Wände bezeichnet, aus Holzbaustoffen hergestellt sind.

Eine Anordnung der eingangs genannten Gattung ist aus AU 2004 203 153 A1 bekannt.

Der Erfindung liegt die Aufgabe zugrunde, eine Anordnung dieser Art aufzuzeigen, mit der auch bei Einsatz von Holzbaustoffen eine ausreichend lange Verhinderung einer Ausbreitung eines Brandes in einem Gebäude gewährleistet ist und bei der eine einfache Anpassung an unterschiedliche Wanddicken möglich ist.

Diese Aufgabe wird erfindungsgemäß mit den in den unabhängigen Ansprüchen 1 und 2 angegebenen Merkmalen gelöst.

Die erfindungsgemäße Anordnung zum Verhindern der Ausbreitung eines Brandes in einem Gebäude umfasst somit zumindest eine Gebäudewand aus Holzbaustoffen. Die Wand kann aus Holz ausgebildet sein und zusätzlich einseitig oder mehrseitig und sodann ein- oder mehrlagig bekleidet sein. Die Holzbaustoffe können in massiver Bauweise aus Vollholz oder aus beispielsweise Holzspänen zusammengesetzt sein, die sodann als Brettsperrholz, Brettschichtholz, Kreuzlagenholz usw. bekannt sind. Auch sind als Skelettbauweise, Holzrahmenbauweise, Holzständer- und Holztafelbau bezeichnete Bauformen der Wände mit Ständer oder Stützen aus Holz und Decken mit Balken aus Holz bekannt. Bekleidungen oder Beplankungen können in beiden Bauweisen aus mineralischen oder Holzbaustoffen sein; insbesondere nicht brennbare erhöhen die Feuerwiderstandsdauer von Holzwänden. In allen Fällen kann die Gebäudewand einem Angriff durch Feuer eine Zeit lang standhalten. Gleichwertig Gebäudewänden oder Wänden sind Gebäudedecken oder Decken. Auch darin können die Brandschutzklappen eingesetzt sein.

Damit sich der Brand nicht durch eine Lüftungsleitung ausbreitet, die durch die Gebäudewand aus Holzbaustoffen hindurchgeführt ist, wird der Lüftungsleitung zumindest eine Brandschutzklappe zugeordnet. Diese schließt im Brandfall und trägt so zur Nichtausbreitung des Brandes durch die Gebäudewand aus Holzbaustoffen bei.

Insofern ist es möglich, eine Gebäudewand aus Holz trotz Hindurchführen einer Lüftungsleitung mit einer hinreichenden Feuerwiderstandsdauer auszurüsten. Holz als brennbarer Baustoff hat besondere Eigenschaften hinsichtlich der Brennbarkeit und erfordert im Allgemeinen Maßnahmen zum Erreichen einer bestimmten Feuerwiderstandsdauer.

Nach der Erfindung ist vorgesehen, dass die Brandschutzklappe mit einer Ummantelung versehen wird. Damit gelingt ein Einbau in Trockenbauweise, ohne die Verwendung und die aufwendige, zu Holz unpassende Verarbeitung von Mörtel. Die damit einhergehende Gewichtsbelastung wird zudem geringer. In die Gebäudewand aus Holzbaustoffen wird passgenau eine Einbauöffnung eingebracht, in welche die Brandschutzklappe gemeinsam mit der Ummantelung weitgehend spielfrei eingesetzt werden kann.

Im Brandfall beginnt auf der brandzugewandten Oberfläche der Holzwand oder Holzdecke nach und nach ein Abbrennen. Wände und Decken aus Holz werden dann im Brandverlauf so lange dünner, bis sie sozusagen durchgebrannt sind. Außerdem kann ein erhöhter Abbrand im umgebenden Bereich von Einbauöffnungen entstehen, weil sich infolge der Laibungen in den Einbauöffnungen die Oberfläche der Wand oder Decke vergrößert. Gleichbedeutend damit ist eine Vergrößerung der auf die Holzwand wirkenden Brandangriffsfläche, sodass das vorhandene Holz schneller abbrennt. Bei nahe beieinander liegenden Einbauöffnungen wirkt sich das besonders aus weil dann zwei Laibungen die Oberflächen und damit die Brandangriffsflächen vergrößern. Mit dem Abbrennen oder Verbrennen entstehen in der Holzwand Löcher und der Raumabschluss geht verloren und die Feuerwiderstandsdauer ist beendet. Die in die Gebäudewand aus Holzbaustoffen eingesetzten Brandschutzklappen müssen daher so ausgeführt sein, dass sie die Wand bzw. Decke hinsichtlich der Feuerwiderstandsdauer nicht schwächen. In die Schutzmaßnahmen müssen daher auch die Laibungen einbezogen werden.

Brandschutzklappen mit Gehäusen aus Stahlblech können allein keinen umfassenden Schutz leisten. Es muss eine Ummantelung aus vorzugsweise einem nicht brennbaren Material erfolgen, die so ausgebildet ist, dass sie auch die Laibungen der Einbauöffnungen innerhalb der Gebäudewand gegen einen Brandangriff abdeckt und somit schützt.

Das Einbringen einer Brandschutzklappe mit einer Ummantelung in die Gebäudewand soll daher so erfolgen, dass es den Laibungen der Einbauöffnung in der Gebäudewand aufliegend zugeordnet ist, diese dadurch abdeckt und gegen einen Angriff von Feuer schützt. Damit stellt die Ummantelung der Brandschutzklappe einer Gebäudewand die Eigenschaft der Feuerwiderstandsdauer wieder zur Verfügung, die sie ansonsten im Bereich der Laibung durch die Einbauöffnung verlieren würde.

Der Gegenstand der Erfindung unterscheidet sich damit von Gebäudewänden aus Holzbaustoffen, die bausseits für den Einbau einer Brandschutzklappe vorbereitet sind. Derartige Gebäudewände sind in Musterrichtlinien beschrieben. Dort werden Durchbrüche in Holzwänden bauseits auf den Einbau von Brandschutzklappen durch umlaufendes Füllholz in Kombination mit Brandschutzbekleidungen mit Fugenversatz, Stufenfalz oder Nut- und Federverbindung vorbereitet. Nach dem Gegenstand der vorliegenden Anmeldung wird der Laibungsschutz mit der Ummantelung erst dann hergestellt, wenn die Brandschutzklappe eingebaut wird. Das ermöglicht vorteilhaft den Verzicht auf die Erstellung des zuvor genannten aufwendigen Durchbruchs und somit einen deutlich wahlfreieren Einbauort für eine oder mehrere Brandschutzklappen.

Erforderlich ist somit, dass die Tiefe der Ummantelung zu den Brandschutzklappen praktisch gleich der Dicke der Gebäudewand bzw. der Gebäudedecke ist. Auf diese Weise deckt die Ummantelung die Laibungen der Einbauöffnung für die Brandschutzklappe vollständig ab.

Brandschutzklappen werden allerdings üblicherweise in nur bestimmten Baulängen hergestellt. Das betrifft auch Ummantelungen zum Schutz der Laibungen. Andererseits können die Dicken der Wände und Decken und damit die Tiefen der Laibungen in den Einbauöffnungen aus Gründen der Feuerwiderstandsdauer oder der Statik variieren und völlig anders sein.

Um genau auf die jeweiligen Dicken der Wände und Decken angepasste Brandschutzklappen und Ummantelungen zu vermeiden ist vorgesehen, dass die Tiefe der Ummantelung für die Brandschutzklappen an die Dicke der Gebäudewand bzw. Gebäudedecke angepasst werden kann. Auf diese Weise deckt die Ummantelung die Laibungen der Einbauöffnung für die Brandschutzklappe vollständig ab. Wenn die zu einer Brandschutzklappe zugehörige Ummantelung eine andere, eine geringere oder eine größere Tiefe als die Dicke der Gebäudewand hat, werden einfache Ergänzungen oder Anpassungen zum vollständigen Schutz der Laibungen in der Einbauöffnung vorgesehen.

In diesen Fällen sind Zurüstungen wie zum Beispiel isolierende und/oder nicht brennbare Elemente vorgesehen. Diese können die Ummantelung oder die zu schützende Wand ergänzen. Die Zurüstungen werden wie die Ummantelung vorzugsweise aus einem nicht brennbaren Material gefertigt. Sie können ein-oder mehrlagig sein, dabei kombiniert aus elastischen oder festen Materialien bestehen, passgenau ausgeführt oder in die Wand eingelassen werden und dabei auch von der Wand bis an die Brandschutzklappe heran geführt werden.

Wenn ein passgenaues Einsetzen der Brandschutzklappe mit Ummantelung in die Gebäudewand nicht möglich ist, werden entstehende oder verbleibende Spalte vorzugsweise mit Spaltabdeckungen abgedeckt. Diese Spaltabdeckungen können auch oder zusätzlich mit elastischem und/oder intumeszierendem Material bereichsweise oder vollständig hinterfüllt werden, wobei mit diesem Material dann auch eine Verfüllung und damit SpaltAbdichtung erfolgen kann.

Zur weiteren Ausbildung der erfindungsgemäßen Anordnung ist noch vorgesehen, dass sie Halteelemente zum Befestigen der Brandschutzklappe in der Gebäudewand auf beiden Seiten der Gebäudewand umfasst. Aufgrund dieser Halteelemente wird die Brandschutzklappe auch dann noch in der Gebäudewand gehalten, wenn diese auf einer Seite einen Feuerangriff und damit teilweisen Abbrand erfährt. Die Halteelemente können dabei als Klemmbefestigung, als Schraubbefestigung oder kombiniert ausgeführt werden, je nach dem, wie es die Verbindung von Wand über Ummantelung bis hin zur Brandschutzklappe erfordert.

Die Verhinderung des Versagens bzw. des Herausfallens der Brandschutzklappe führt zu einem fortgesetzten Laibungsschutz. Damit wird auch das sogenannte Kapselkriterium eingehalten, dieses basiert auf einer besonderen Zusatzanforderung, nach der nicht nur auf der brandabgewandten Seite Temperaturgrenzen einzuhalten sind, sondern auch im Inneren der Wand und zwar direkt hinter der Bekleidung der feuerzugewandten Seite. Nach diesem Kriterium sollen statisch tragenden Holzständer weder verkohlen noch entzünden, also erhalten bleiben, so dass die Wand trotz Feuerangriff nicht nur eine Brandausbreitung verhindert, sondern auch statisch in Takt bleibt.

Normalerweise sind Kapselungen aus Gipsplatten, Kalziumsilikatplatten oder aus bestimmten Holzarten ausgebildet. Der Brandangriff darf nicht zu einer mehr oder weniger Zerstörung der derart ausgestalteten Kapselung führen, denn geschützt werden soll das, was unter der Kapselung liegt. Die nach der Weiterbildung eingesetzten Halteelemente bewirken ein Verbleiben der Brandschutzklappe in der Wand. Damit wird auch die von der Brandschutzklappe bereitgestellte Kapselung erhalten und das Kapselkriterium erfüllt.

Ausführungsbeispiele der Erfindung, aus dem sich weitere erfinderische Merkmale ergeben, sind in der Zeichnung dargestellt. Es zeigen:
- Figur 1:: eine teilweise geschnittene Ansicht einer erfindungsgemäßen Anordnung nach einem ersten Ausführungsbeispiel,
- Figur 2:: eine teilweise geschnittene Ansicht einer erfindungsgemäßen Anordnung nach einem zweiten Ausführungsbeispiel,
- Figur 3:: eine Schnittansicht einer Erweiterung der Anordnung nach dem ersten Ausführungsbeispiel und
- Figuren 4 und 5:: Seitenansichten einer Anordnung zum Verhindern der Ausbreitung eines Brandes nach einem dritten Ausführungsbeispiel.
- Figuren 6 und 7:: Seitenansichten einer weiteren Anordnung zum Verhindern der Ausbreitung eines Brandes nach einem vierten Ausführungsbeispiel.

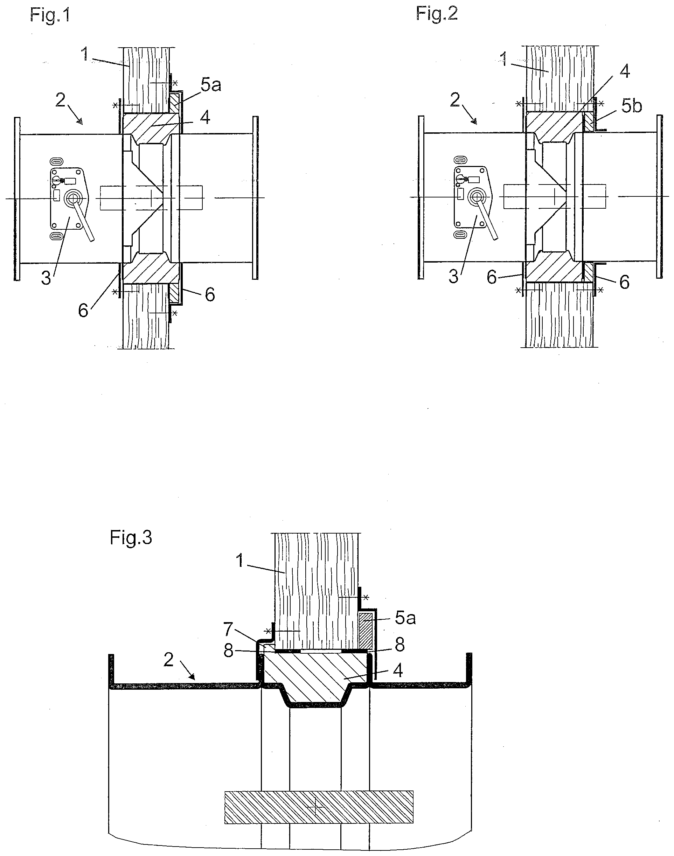

Figuren 1 und 2 zeigen jeweils eine Gebäudewand 1 aus Holzbaustoffen. In die Gebäudewand 1 aus Holz ist eine Brandschutzklappe 2 als Teil einer Lüftungsleitung eingesetzt, wobei in Figur 1 und 2 jeweils die Auslöseeinrichtung bzw. der Antrieb 3 der Brandschutzklappe 2 erkennbar ist.

Für den Einbau der Brandschutzklappe 2 in die Gebäudewand 1 wird eine Ummantelung 4 eingesetzt. Diese Ummantelung 4 ist aus nicht brennbaren Materialien gefertigt, beispielsweise aus Kalziumsilikat. Alternativ kann die Ummantelung 4 aus Mineralwolle gefertigt sein, insbesondere aus einer hochfesten, form- und dimensionsstabilen ein- oder mehrlagigen Mineralwolle. Diese wird auf der Oberfläche mit einer nicht brennbaren Beschichtung versehen, die der Vermeidung von Rauchdurchtritt dient, gleichzeitig die Oberflächenfestigkeit und damit die Stabilität erhöht und zur Fugenabdichtung dient. Diese Kombination wird auch als Weichschott bezeichnet. In diesem Fall können ergänzend spezielle Abhängungen oder Befestigungen eingesetzt werden, um die Brandschutzklappe lagestabil in einer entsprechend ausgebildeten Ummantelung 4 halten zu können. Figur 1 zeigt, dass die Tiefe der Ummantelung 4 etwas größer als die Dicke der Gebäudewand 1 ist, daher wird auf der Nichtantriebsseite der Brandschutzklappe 2 noch eine Zurüstung 5a als ergänzendes Isolierelement angeordnet.

Figur 2 zeigt, dass die Tiefe der Ummantelung 4 kleiner als die Dicke der Gebäudewand 1 ist, daher wird auf der Nichtantriebsseite der Brandschutzklappe 2 noch ein ergänzendes Isolierelement als Zurüstung 5b angeordnet.

Zur Befestigung von Brandschutzklappe 2, Ummantelung 4 und den Zurüstungen 5a und 5b werden Halteelemente 6 eingesetzt, diese sind als ebene oder ein-bzw. mehrfach gebogene Winkel ausgebildet. Die Halteelemente 6 werden auf beiden Seiten der Gebäudewand 1 vorgesehen. Die Halteelemente 6 können auf der Seite der Auslöseeinrichtung 3 anders als auf der Seite ohne Auslöseeinrichtung 3 sein.

Figur 3 zeigt, dass im Bereich der Laibungen der Einbauöffnung entstehenden Spalten zwischen Gebäudewand 1, Ummantelung 4 und/oder Zurüstung 5a eine Spaltabdeckung 7 zugeordnet ist. Diese Spaltabdeckung 7 kann zusätzlich mit elastischen bzw. festen und/oder intumeszierenden Materialien 8 zur Spaltabdichtung hinterfüllt bzw. entstehende Spalten damit gefüllt werden.

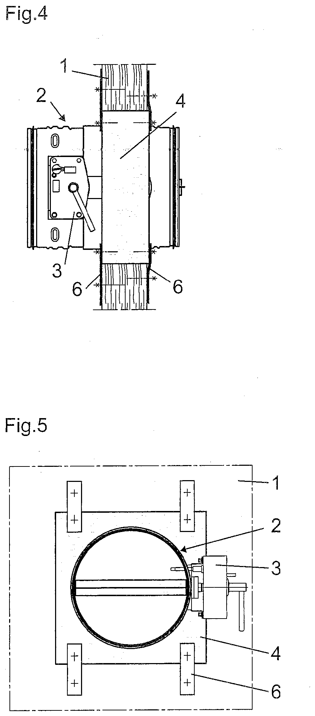

Bei dem Ausführungsbeispiel in Figuren 4 und 5 wird in die Gebäudewand 1 eine Brandschutzklappe 2 mit kreisrundem Querschnitt eingesetzt. Auch hier findet eine Ummantelung 4 Anwendung, die auf beiden Seiten der Gebäudewand 1 mit Halteelementen 6 an der Gebäudewand 1 befestigt wird.

Figur 4 zeigt auch, dass die Ummantelung 4 den eingebrachten Rand der Öffnung für die Brandschutzklappe 2 in der Gebäudewand 1 vollständig abdeckt.

Die Ummantelung 4 besteht wieder aus nicht brennbarem Material.

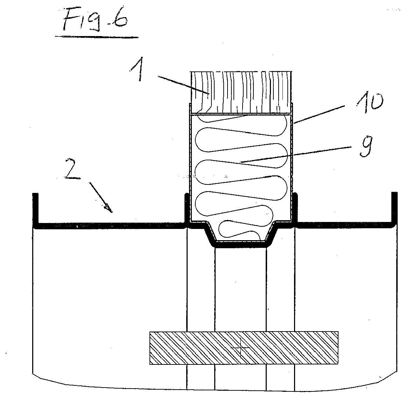

Figur 6 zeigt ein Ausführungsbeispiel, bei dem die Ummantelung 4 aus einer Mineralwolle 9 ausgebildet ist, deren Oberfläche durch eine auf die Mineralwolle aufgebrachte Beschichtung 10 ausgebildet ist. Die Mineralwolle 9 ist form- und dimensionsstabil. Die Beschichtung 10 kann durch einen Anstrich ausgebildet sein, sie ist rauchdicht, fugendicht und oberflächenstabilisierend ausgebildet. Die Beschichtung 10 kann dabei benachbarte Bauteile überlappen, wie in Figur 6 in Bezug auf die Wand 1 gezeigt. Verbleibende Zwischenräume zwischen Bauteilen der Brandschutzklappe 2 und der Ummantelung 4 können wieder mit Hilfe von Zurüstungen 5a aufgefüllt sein.

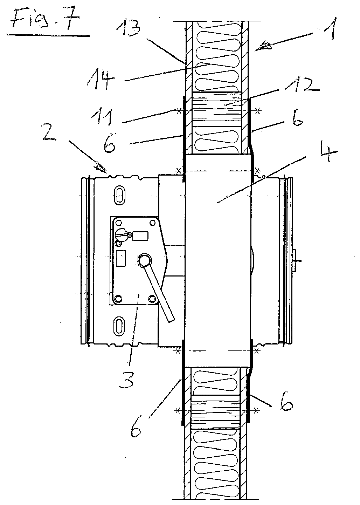

In Figur 7 ist die Brandschutzklappe 2 in eine Holzständerwand ein eingelassen. Dazu wird in die Holzständerwand ein Ausschnitt geschnitten, in den die Brandschutzklappe 2 mit ihrer Ummantelung 4 formschlüssig eingesetzt wird. Halteelemente 6 verbinden Ummantelung 4 und Brandschutzklappe 2 mit der Wandung 1. Durch die Halteelemente 6 hindurchgeführte Befestigungsmittel 11 werden auf Höhe eines Ständers 12 durch die Beplankungen 13 der Ständer 12 geführt. Die Holzständerwand 1 ist zwischen den Beplankungen 13 mit einer Füllung 14 ausgefüllt. Diese wird im Einsatzbereich der Brandschutzklappe 2 von der Ummantelung vollständig abgedeckt.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Anordnung zum Verhindern der Ausbreitung eines Brandes in einem Gebäude mit zumindest einer Gebäudewand (1) und mit wenigstens einer durch die Gebäudewand hindurchführenden Lüftungsleitung, wobei die Gebäudewand aus Holzbaustoffen gefertigt ist und wobei der Lüftungsleitung zumindest eine Brandschutzklappe (2) zugeordnet ist, wobei in der Gebäudewand zumindest eine Laibungen aufweisende Einbauöffnung für die Brandschutzklappe angeordnet ist und der Brandschutzklappe eine Ummantelung (4) zumindest abschnittsweise zugeordnet ist, die zwischen der Brandschutzklappe und an die Brandschutzklappe angenäherten Abschnitten der Gebäudewand angeordnet ist, wobei die Anordnung Halteelemente (6) zum Befestigen der Brandschutzklappe (2) in der Gebäudewand (1) auf beiden Seiten der Gebäudewand umfasst, und die Tiefe der Ummantelung für die Brandschutzklappe größer ist als die Dicke der Gebäudewand, **dadurch gekennzeichnet, dass** zwischen einem der Halteelemente (6) und der Gebäudewand eine die Gebäudewand ergänzende Zurüstung (5a) aus einem nicht brennbaren Material vorgesehen ist.

2. Anordnung zum Verhindern der Ausbreitung eines Brandes in einem Gebäude mit zumindest einer Gebäudewand (1) und mit wenigstens einer durch die Gebäudewand hindurchführenden Lüftungsleitung, wobei die Gebäudewand aus Holzbaustoffen gefertigt ist und wobei der Lüftungsleitung zumindest eine Brandschutzklappe (2) zugeordnet ist, wobei in der Gebäudewand zumindest eine Laibungen aufweisende Einbauöffnung für die Brandschutzklappe angeordnet ist und der Brandschutzklappe eine Ummantelung (4) zumindest abschnittsweise zugeordnet ist, die zwischen der Brandschutzklappe und an die Brandschutzklappe angenäherten Abschnitten der Gebäudewand angeordnet ist, wobei die Anordnung Halteelemente (6) zum Befestigen der Brandschutzklappe (2) in der Gebäudewand (1) auf beiden Seiten der Gebäudewand umfasst, **dadurch gekennzeichnet, dass** die Tiefe der Ummantelung (4) für die Brandschutzklappe kleiner ist als die Dicke der Gebäudewand (1), und dass zwischen einem der Halteelemente (6) und der Ummantelung (4) eine die Ummantelung ergänzende Zurüstung (5b) aus einem nicht brennbaren Material vorgesehen ist.

3. Anordnung nach Anspruch 1 oder 2, **dadurch gekennzeichnet, dass** die Gebäudewand eine Wand aus Holzbaustoffen in massiver Bauweise ist.

4. Anordnung nach Anspruch 1 oder 2, **dadurch gekennzeichnet, dass** die Gebäudewand eine Wand aus Holzbaustoffen in massiver Bauweise und mineralischen Baustoffen ist.

5. Anordnung nach Anspruch 1 oder 2, **dadurch gekennzeichnet, dass** die Gebäudewand eine Wand aus Holzbaustoffen in Skelett-Bauweise und mineralischen Baustoffen ist.

6. Anordnung nach einem der vorhergehenden Ansprüche, **dadurch gekennzeichnet, dass** die ergänzenden Zurüstungen aus einem festen Material, insbesondere aus Kalziumsilikat gefertigt sind.

7. Anordnung nach einem der vorhergehenden Ansprüche, **dadurch gekennzeichnet, dass** die Ummantelung (4) aus einem nicht brennbarem Material gefertigt ist.

8. Anordnung nach einem der vorhergehenden Ansprüche, **dadurch gekennzeichnet, dass** die Ummantelung (4) aus einem festen Material, insbesondere aus Kalziumsilikatplatten oder aus dimensionsstabiler und beschichteter Mineralwolle, ausgebildet ist.

9. Anordnung nach einem der vorhergehenden Ansprüche, **dadurch gekennzeichnet, dass** der Ummantelung zumindest abschnittsweise Mittel (8) zur Spaltabdeckung und Spaltabdichtung zugeordnet sind.

## Claims

1. An arrangement for preventing spread of fire in a building having at least one building wall (1) and at least one ventilation duct passing through said wall, the building wall being made of a wooden construction material, and the ventilation duct having at least one fire protection valve (2), wherein the building wall is formed with at least one mounting aperture for the fire protection valve, said aperture having embrasures, said fire protection valve having, at least in certain sections, a jacket (4) that is arranged between the fire protection valve and parts of the building wall that are proximal to the fire protection valve, the arrangement comprising holding members (6) for securing the fire protection valve (2) in the building wall (1) on both sides of the building wall, and the depth of the jacket for the fire protection valve being larger than the thickness of the building wall, **characterized in that** a preparation (5a) that is supplementing the building wall and is made of a non-combustible material is provided between one of the holding members (6) and the building wall.

2. An arrangement for preventing spread of fire in a building having at least one building wall (1) and at least one ventilation duct passing through said wall, the building wall being made of a wooden construction material, and the ventilation duct having at least one fire protection valve (2), wherein the building wall is formed with at least one mounting aperture for the fire protection valve, said aperture having embrasures, said fire protection valve having, at least in certain sections, a jacket (4) that is arranged between the fire protection valve and parts of the building wall that are proximal to the fire protection valve, the arrangement comprising holding members (6) for securing the fire protection valve (2) in the building wall (1) on both sides of the building wall, **characterized in that** the depth of the jacket (4) for the fire protection valve is smaller than the thickness of the building wall (1), and **in that** a preparation (5b) that is made of a non-combustible material and supplements the jacket (4) is provided between one of the holding members (6) and the jacket (4).

3. Arrangement according to claim 1 or 2, **characterized in that** the building wall is a massive wall made of wooden construction material.

4. Arrangement according to claim 1 or 2, **characterized in that** the building wall is a massive wall made of wooden construction material and mineral-based construction material.

5. Arrangement according to claim 1 or 2, **characterized in that** the building wall is a skeleted wall made of wooden construction material and mineral-based construction material.

6. Arrangement according to any of the preceding claims, **characterized in that** the supplementing preparations are made of a solid material, in particular calcium silicate.

7. Arrangement according to any of the preceding claims, **characterized in that** the jacket (4) is made of a non-combustible material.

8. Arrangement according to any of the preceding claims, **characterized in that** the jacket (4) is made of solid material, particularly silicon plates or dimension-stable coated mineral wool.

9. Arrangement according to any of the preceding claims, **characterized in that** the jacket is, at least in sections, provided with means (8) for covering and sealing gaps.

## Revendications

1. Système destiné à empêcher la propagation d'un incendie dans un bâtiment comportant au moins un mur de bâtiment (1) et au moins un conduit de ventilation traversant le mur de bâtiment, dans lequel le mur de bâtiment est fabriqué à partir de matériaux de construction en bois et dans lequel le conduit de ventilation est associé à au moins un clapet coupe-feu (2), dans lequel au moins une ouverture de montage pour le clapet coupe-feu, comportant des intrados, est agencée dans le mur de bâtiment et le clapet coupe-feu est au moins partiellement associé à une gaine qui est agencée entre le clapet coupe-feu et des parties du mur de bâtiment rapprochées du clapet coupe-feu, dans lequel le système comprend des éléments de support (6) pour fixer le clapet coupe-feu (2) dans le mur de bâtiment (1) des deux côtés du mur de bâtiment, et la profondeur de la gaine pour le clapet coupe-feu est plus grande que l'épaisseur du mur de bâtiment, **caractérisé en ce qu'**un équipement (5a) en matériau incombustible complétant le mur de bâtiment est prévu entre l'un des éléments de support (6) et le mur de bâtiment.

2. Système destiné à empêcher la propagation d'un incendie dans un bâtiment ayant au moins un mur de bâtiment (1) et au moins un conduit de ventilation traversant le mur de bâtiment, dans lequel le mur de bâtiment est fabriqué à partir de matériaux de construction en bois et dans lequel le conduit de ventilation est associé à au moins un clapet coupe-feu (2), dans lequel au moins une ouverture de montage pour le clapet coupe-feu, comportant des intrados, est agencée dans le mur de bâtiment et le clapet coupe-feu est au moins partiellement associé à une gaine qui est agencée entre le clapet coupe-feu et des parties du mur de bâtiment rapprochées du clapet coupe-feu, dans lequel le système comprend des éléments de support (6) pour fixer le clapet coupe-feu (2) dans le mur de bâtiment (1) des deux côtés du mur de bâtiment, **caractérisé en ce que** la profondeur de la gaine (4) pour le clapet coupe-feu est plus petite que l'épaisseur du mur de bâtiment, et **en ce qu'**un équipement (5b) en matériau incombustible complétant le mur de bâtiment est prévu entre l'un des éléments de support (6) et le mur de bâtiment.

3. Système selon la revendication 1 ou 2, **caractérisé en ce que** le mur de bâtiment est un mur en matériaux de construction massive en bois.

4. Système selon la revendication 1 ou 2, **caractérisé en ce que** le mur de bâtiment est un mur en matériaux de construction massive en bois et en matériaux de construction minéraux.

5. Système selon la revendication 1 ou 2, **caractérisé en ce que** le mur de bâtiment est un mur en matériaux de construction à squelette en bois et en matériaux de construction minéraux.

6. Système selon l'une des revendications précédentes, **caractérisé en ce que** les équipements en complément sont fabriqués à partir d'un matériau solide, en particulier à partir de silicate de calcium.

7. Système selon l'une des revendications précédentes, **caractérisé en ce que** la gaine (4) est fabriquée à partir d'un matériau incombustible.

8. Système selon l'une des revendications précédentes, **caractérisé en ce que** la gaine (4) est formée à partir d'un matériau solide, en particulier à partir de plaques de silicate de calcium ou de laine dimensionnellement stable et revêtue.

9. Système selon l'une des revendications précédentes, **caractérisé en ce que** des moyens (8) de revêtement de fente et d'étanchéité de fente sont au moins partiellement associés à la gaine.
